# FASCICULE DE BREVET EUROPEEN

(11) **EP 3 267 767 B1**
(45) Date de publication et mention de la délivrance du brevet: **06.03.2019**
(21) Numéro de dépôt: 17178790.6
(22) Date de dépôt: 29.06.2017
(51) Int. Cl.: B60Q 1/34, H05B 33/08, H05B 37/02

(54) **DISPOSITIF D'ECLAIRAGE ET/OU SIGNALISATION AVEC EFFET DE DEFILEMENT**
VORRICHTUNG ZUR BELEUCHTUNG UND/ODER SIGNALISIERUNG MIT LICHTLAUFEFFEKT
LIGHTING AND/OR SIGNALLING DEVICE WITH SCROLLING EFFECT

(30) Priorité: 05.07.2016 FR 1656391
(43) Date de publication de la demande: 10.01.2018
(73) Titulaire: Valeo Vision, 93012 Bobigny Cedex (FR)
(72) Inventeur: ALBOU, Pierre, 93012 Bobigny Cedex (FR)

(56) Documents cités:
- US-A1- 2014 246 980

## Description

L'invention a trait au domaine de l'éclairage et/ou de la signalisation, notamment pour véhicules automobiles.

Elle trouve notamment des applications dans les phares, la carrosserie ou l'habitacle d'un véhicule automobile.

Les sources de lumière utilisées pour l'éclairage et la signalisation dans les véhicules automobiles sont de plus en plus fréquemment constituées par des diodes électroluminescentes, notamment pour des avantages d'encombrement et d'autonomie par rapport à des sources de lumière classiques. L'utilisation de diodes électroluminescentes dans les modules d'éclairage et/ou de signalisation a permis en outre aux acteurs du marché (fabricant d'automobiles et concepteur de dispositifs d'éclairage et/ou de signalisation) d'apporter une touche créative à la conception de ces dispositifs, notamment pour l'utilisation d'un nombre toujours plus grand de ces diodes électroluminescentes pour réaliser des effets optiques.

L'un de ces effets optiques consiste en un allumage progressif d'une série de diodes électroluminescentes, de manière à créer un effet de défilement, aussi appelé « *tracer light* » en anglais. Un tel effet peut être utilisé pour la signalisation d'un changement de direction, avec effet clignotant ou non, ou bien pour la personnalisation de l'éclairage de l'habitacle du véhicule automobile.

Les solutions connues pour réaliser un tel effet de défilement consistent à utiliser un driver (ou pilote) apte à alimenter successivement les diodes électroluminescentes réalisant la fonction, chaque diode électroluminescente étant reliée au driver via un fil d'alimentation dédié. En plus du fil d'alimentation, un fil de masse est en outre requis.

On entend par driver un dispositif de conversion d'une alimentation électrique issue d'un réseau d'alimentation électrique du véhicule en une alimentation électrique adaptée à la réalisation d'une fonction lumineuse souhaitée, et éventuellement à fournir ladite alimentation électrique adaptée à une source lumineuse pour la réalisation de ladite fonction lumineuse souhaitée.

Toutefois, au vu du nombre élevé de diodes électroluminescentes utilisées pour la réalisation de telles fonctions, l'utilisation de fils dédiés pour chacune de ces diodes est une solution très coûteuse et encombrante.

Le document US20140246980 A1 décrit un éclairage de véhicule disposant de la fonction "tracer light" comprenant une pluralité de diodes électroluminescentes montées en série et alimentées par une source de courant et un circuit de commande comportant une pluralité de circuits de contrôle montés en série montée en parallèle de la pluralité de diodes, chaque circuit de contrôle comprenant un commutateur commandé par une chute de tension particulière associée à chaque diode électroluminescente.

La présente invention vient améliorer la situation.

Un aspect de l'invention concerne un dispositif d'émission lumineuse, notamment d'éclairage et/ou de signalisation, notamment pour véhicule automobile, comprenant :
au moins un premier module électroluminescent et un deuxième module électroluminescent alimentés en série ;
chaque module électroluminescent comprenant, en parallèle :
- une première branche comprenant une source de lumière ayant une première tension directe seuil au-delà de laquelle la source de lumière est passante ;
- une deuxième branche comprenant une impédance ayant une valeur telle que la tension aux bornes de ladite impédance est inférieure à la première tension directe seuil de la source de lumière lorsque le module électroluminescent est alimenté ;
- une troisième branche comprenant un module de temporisation apte à temporiser une durée prédéterminée et à modifier, à l'issue de ladite durée prédéterminée, une impédance globale de la deuxième branche de manière à ce qu'une tension dans la deuxième branche soit supérieure à la première tension directe seuil de la source de lumière.

La durée prédéterminée dans le premier module de lumière électroluminescent est inférieure à la durée prédéterminée dans le deuxième module de lumière électroluminescent.

Ainsi, la présente invention permet la réalisation d'une fonction de défilement avec au moins deux modules électroluminescents connectés en série, ce qui permet de réduire l'encombrement puisqu'un unique fil d'alimentation est nécessaire.

Selon un mode de réalisation, la source de lumière comprend au moins un élément émissif à semi-conducteur, notamment une diode électroluminescente.

Les technologies à semi-conducteur permettent une réduction de l'encombrement et une personnalisation du dispositif d'émission lumineuse.

Selon un mode de réalisation, chacune des sources de lumière peut comprendre une pluralité d'unités électroluminescentes de dimensions submillimétriques formées sur un substrat.

En complément, chacune des unités électroluminescentes peut être un bâtonnet.

L'utilisation d'une source à bâtonnets électroluminescents de dimensions submillimétriques permet de placer un driver alimentant les modules juste en dessous du substrat ce qui réduit l'encombrement du dispositif selon l'invention.

Selon un mode de réalisation, les deuxième et troisième branches sont reliées au substrat. L'encombrement du dispositif est ainsi réduit.

Selon une réalisation, les sources de lumière peuvent être formées sur un même substrat.

Une telle solution permet de réduire le coût de production d'un dispositif selon l'invention.

Selon une variante, chacune des sources de lumière peut comprendre une diode électroluminescente reliée à un circuit intégré dédié et les deuxième et troisième branches d'un module électroluminescent peuvent être comprises dans le circuit intégré ou dans un circuit intégré soudé sous un substrat de la diode électroluminescente.

L'invention est ainsi compatible avec des sources à diodes électroluminescentes.

Selon un mode de réalisation de l'invention, les premiers et deuxièmes modules électroluminescents peuvent être alimentés cycliquement durant des périodes d'alimentation espacées par des périodes de coupure durant lesquelles les premiers et deuxièmes modules de lumière électroluminescente ne sont pas alimentés, et les durées prédéterminées des modules électroluminescents peuvent être toutes inférieures à une période d'alimentation.

Ainsi, un effet de défilement avec clignotant peut être réalisé.

En complément, les durées prédéterminées des modules électroluminescents sont toutes au moins trois fois inférieures à la période d'alimentation.

Une telle réalisation permet d'assurer que la fonction d'éclairage/signalisation est bien visualisable malgré l'effet de défilement.

Selon un mode de réalisation, la deuxième branche peut comprendre en outre un interrupteur fermé par défaut, et le module de temporisation peut modifier l'impédance globale de la deuxième branche en ouvrant l'interrupteur.

L'ouverture d'un interrupteur permet d'assurer une tension suffisante aux bornes de la deuxième branche pour assurer que la source de lumière soit passante.

Selon un mode de réalisation, une sortie du module de temporisation du premier module électroluminescent peut être reliée à une entrée du module de temporisation du deuxième module électroluminescent, les modules de temporisation peuvent être aptes à appliquer des durées de temporisation respectives, la durée prédéterminée du premier module électroluminescent peut être égale à la durée de temporisation du module de temporisation du premier module électroluminescent, et la durée prédéterminée du deuxième module électroluminescent peut être égale à la durée prédéterminée du premier module électroluminescent plus la durée de temporisation du module de temporisation du deuxième module électroluminescent.

De manière plus générale, la durée prédéterminée d'un module de lumière électroluminescent est égale à la durée de temporisation de son module de temporisation plus la durée prédéterminée du module de lumière électroluminescent précédent dans le montage en série.

Un tel mode de réalisation permet de créer un enchaînement des temporisations des modules électroluminescents, générant ainsi un effet en cascade.

En variante, une sortie du module de temporisation du premier module de lumière électroluminescent peut être reliée à une entrée du module de temporisation du deuxième module de lumière électroluminescent, les modules de temporisation peuvent être aptes à appliquer une même durée de temporisation donnée, la durée prédéterminée du premier module de lumière électroluminescent peut être égale à la durée de temporisation donnée et la durée prédéterminée du deuxième module de lumière électroluminescent peut être égale à deux fois la durée de temporisation donnée.

De manière plus générale, la durée prédéterminée d'un module de lumière électroluminescent est égale à la durée de temporisation plus la durée prédéterminée du module de lumière électroluminescent précédent dans le montage en série.

Un tel mode de réalisation permet, en plus des avantages du mode de réalisation précédent, d'utiliser les mêmes modules de temporisation (la même durée de temporisation étant appliquée), ce qui permet de réduire les coûts de production du dispositif d'éclairage/signalisation selon l'invention.

Selon un mode de réalisation, chaque module de temporisation peut comprendre au moins une capacité, une première résistance et un comparateur agencés de manière à ce que, lorsque les modules électroluminescents sont alimentés, une tension aux bornes de la capacité devienne supérieure à une tension seuil du comparateur à l'issue de la durée prédéterminée, et le comparateur peut être configuré pour modifier la tension dans la deuxième branche lorsque la tension aux bornes de la capacité est supérieure à la tension seuil du comparateur.

Ainsi, un circuit électronique simple permet de réaliser la fonction de temporisation.

En complément, et lorsque les modules électroluminescents sont alimentés cycliquement, chaque module de temporisation peut comprendre en outre une deuxième résistance en parallèle avec la capacité de manière à décharger la capacité lors de chaque période de coupure.

Un effet de clignotement est ainsi rendu possible.

Selon un mode de réalisation, pour chaque module électroluminescent, la deuxième branche peut comprendre :
- un transistor à effet de champ ;
- un transistor NPN ;
- une première impédance placée entre une entrée du module électroluminescent et un collecteur du transistor NPN ;
- une deuxième impédance placée entre une sortie du module életroluminescent et un émetteur du transistor NPN ;
- une troisième impédance placée entre l'entrée du module électroluminescent et une base du transistor NPN ;
- une quatrième impédance placée entre la sortie du module électroluminescent et une grille du transistor à effet de champ ;
Une source du transistor à effet de champ peut être reliée à la sortie du module électroluminescent, un drain du transistor à effet de champ peut être relié à la grille du transistor NPN, la sortie du module de temporisation peut être reliée à la grille du transistor à effet de champ, de manière à ce que :
durant la période prédéterminée, le transistor NPN soit apte à faire circuler un courant entre le collecteur et l'émetteur, de manière à ce qu'une impédance totale de la deuxième dépendent des première, deuxième et troisième impédances uniquement, les première, deuxième et troisième impédances étant telles que la tension dans la deuxième branche est inférieure à la tension directe seuil de la source de lumière ;
à l'issue de la période prédéterminée, le module de temporisation spot apte à délivrer un courant à la grille du transistor à effet de champ, provoquant le passage du courant entre le drain et la source du transistor à effet de champ et augmentant ainsi une impédance du transistor NPN et l'impédance globale dans la deuxième branche, au-delà de la tension directe seuil de la source de lumière

Ainsi, il est possible d'augmenter à moindres coûts l'impédance globale de la deuxième branche.

Selon un mode de réalisation, le dispositif peut comprendre en outre un pilote apte à alimenter en série les modules électroluminescents.

On entend par pilote un module de type driver. Ainsi, un unique pilote délivre un unique signal d'alimentation, ce qui réduit l'encombrement et les coûts comparativement aux solutions de l'art antérieur.

D'autres caractéristiques et avantages de l'invention apparaîtront à l'examen de la description détaillée ci-après, et des dessins annexés sur lesquels:
- la figure 1 illustre un dispositif selon un mode de réalisation de l'invention;
- la figure 2 est une représentation schématique en perspective de la source de lumière de la figure 1, selon un mode de réalisation de l'invention ;
- la figure 3 est une vue en coupe d'un mode de réalisation particulier d'une source de lumière selon l'invention ;
- la figure 4 présente un schéma détaillé d'une deuxième branche d'un module électroluminescent selon un mode de réalisation de l'invention ;
- la figure 5 est un schéma détaillé d'un module de temporisation selon un mode de réalisation de l'invention ;
- la figure 6 est un schéma détaillé d'un module de temporisation selon une variante de réalisation de l'invention.

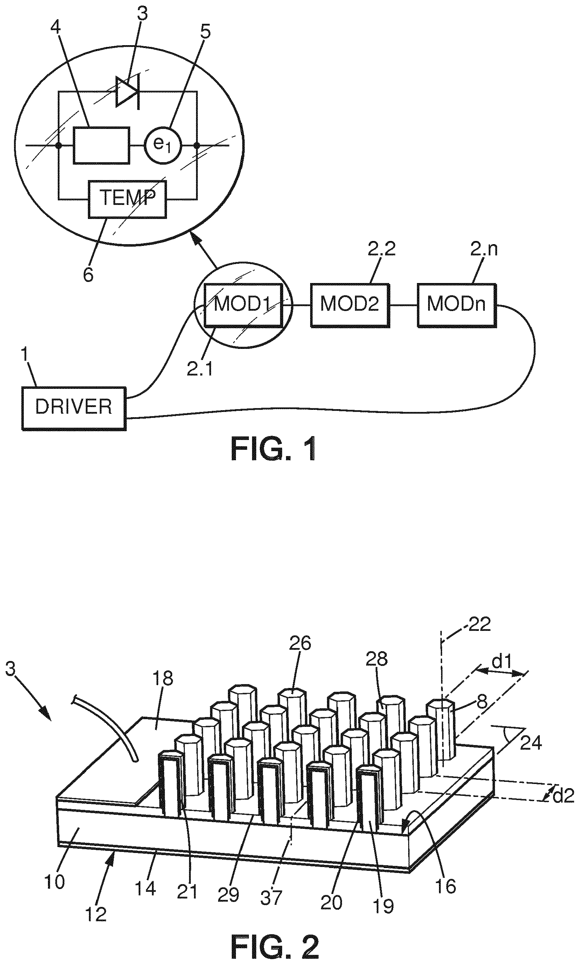

La figure 1 illustre un dispositif d'émission lumineuse, notamment d'éclairage et/ou de signalisation, notamment pour véhicule automobile, comprenant un driver ou pilote 1 apte à alimenter électriquement une pluralité de n modules électroluminescents 2.1, 2.2 ... 2.n en série, n étant supérieur ou égal à deux, comprenant au moins un premier module électroluminescent 2.1 et un deuxième module électroluminescent 2.2.

Comme détaillé dans ce qui suit, les modules 2.1 à 2.n sont configurés de manière à s'allumer de manière successive, les uns après les autres, lorsqu'ils sont alimentés par le pilote 1. L'agencement dans l'espace des modules 2.1 à 2.n permet ainsi la réalisation de fonctions lumineuses à effet de défilement, pouvant être utilisés pour indiquer un changement de direction du véhicule automobile, avec un effet clignotant supplémentaire ou non.

Un effet clignotant peut être obtenu en alimentant cycliquement les modules 2.1 à 2.n, via le pilote 1, sur des périodes d'alimentation espacées par des périodes par des périodes de coupure durant lesquelles les modules électroluminescents 2.1 à 2.n ne sont pas alimentés.

Selon l'invention, chaque module électroluminescent comprend, en parallèle :
- une première branche comprenant une source de lumière 3 ayant une première tension directe seuil au-delà de laquelle la source de lumière électroluminescente est passante. La première tension directe seuil peut par exemple être égale à 3,5 V. La source de lumière 3 peut comprendre au moins un élément émissif à semi-conducteur;
- une deuxième branche comprenant un élément 5, tel qu'une source de tension comprenant au moins une impédance de type résistance par exemple, ayant une valeur telle que la tension aux bornes de l'élément est inférieure à la première tension directe seuil de la source de lumière électroluminescente lorsque le module de lumière électroluminescent est alimenté. Par exemple, la tension aux bornes de l'élément 5 peut être égale à 2V lorsque le module électroluminescent est alimenté ; et
- une troisième branche comprenant un module de temporisation 6 apte à temporiser une durée prédéterminée et à modifier (augmenter), à l'issue de la durée prédéterminée, une impédance globale de la deuxième branche de manière à ce qu'une tension dans la deuxième branche soit supérieure à la tension seuil de la source de lumière. Afin de modifier l'impédance globale de la deuxième branche, le module de temporisation 6 peut par exemple ouvrir un interrupteur 4 de la deuxième branche, à l'issue de la durée prédéterminée. Un exemple détaillé de circuit électronique permettant de réaliser la fonction du module de temporisation 6 et de l'interrupteur 4 seront décrits ultérieurement.

Les modules électroluminescents 2.1, 2.2 et 2.n appliquent des durées prédéterminées croissantes, de manière à créer une fonction lumineuse à affichage progressif (effet de défilement). A cet effet, la durée prédéterminée dans le premier module électroluminescent 2.1 est inférieure à la durée prédéterminée dans le deuxième module électroluminescent 2.2, qui est inférieure à la durée prédéterminée dans le n-ième module électroluminescent 2.n.

Ainsi, un effet de défilement est créé en utilisant un unique fil d'alimentation et un unique fil de masse, reliés au pilote 1, ce qui réduit l'encombrement et le coût comparativement aux solutions de l'art antérieur.

Chaque source de lumière 3 peut comprendre, selon un premier mode de réalisation, une pluralité de bâtonnets électroluminescents de dimensions submillimétriques formés sur un substrat. Optionnellement, les deuxièmes et troisièmes branches peuvent alors être reliées au substrat, par exemple soudées sous le substrat. Dans ce cas, les sources de lumière 3 peuvent être formées sur un même substrat.

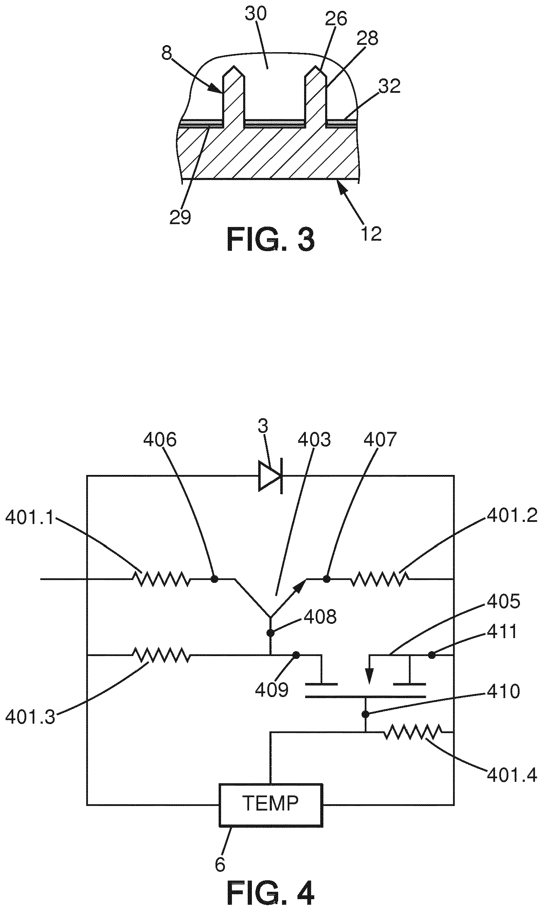

Une source de lumière 3 selon le premier mode de réalisation de l'invention est décrite en référence aux figures 2 et 3.

En référence à la figure 2, la source de lumière 3 comprend une pluralité de bâtonnets électroluminescents 8 de dimensions submillimétriques, que l'on appellera par la suite bâtonnets électroluminescents. Ces bâtonnets électroluminescents 8 prennent naissance sur un même substrat 10. Chaque bâtonnet électroluminescent, ici formé par utilisation de nitrure de gallium (GaN), s'étend perpendiculairement, ou sensiblement perpendiculairement, en saillie de substrat, ici réalisé à base de silicium, d'autres matériaux comme du carbure de silicium pouvant être utilisés pour le substrat sans sortir du contexte de l'invention. A titre d'exemple, les bâtonnets électroluminescents pourraient être réalisés à partir d'un composé à base de nitrure d'aluminium et de nitrure de gallium (AlN :GaN), ou à partir d'un composé à base d'aluminium, d'indium et de gallium.

Sur la figure 2, le substrat 10 présente une face inférieure 12, sur laquelle est rapportée une première électrode 14, et une face supérieure 16, en saillie de laquelle s'étendent les bâtonnets électroluminescents 8 et sur laquelle est rapportée une deuxième électrode 18. Les électrodes 14 et 18 sont reliées à la première branche.

Différentes couches de matériaux sont superposées sur la face supérieure 16, notamment après la croissance des bâtonnets électroluminescents depuis le substrat ici obtenue par une approche ascendante.

Parmi ces différentes couches, on peut trouver au moins une couche de matériau conducteur électriquement, afin de permettre l'alimentation électrique des bâtonnets. Cette couche est gravée de manière à relier les bâtonnets de la source de lumière 3 entre eux.

Les bâtonnets électroluminescents de dimensions submillimétriques s'étirent depuis le substrat et comportent, tel que cela est visible sur la figure 2, chacun un noyau 19 en nitrure de gallium, autour duquel sont disposés des puits quantiques 20 formés par une superposition radiale de couches de matériaux différents, ici du nitrure de gallium et du nitrure de gallium-indium, et une coque 21 entourant les puits quantiques également réalisée en nitrure de gallium.

Chaque bâtonnet s'étend selon un axe longitudinal 22 définissant sa hauteur, la base 23 de chaque bâtonnet étant disposée dans un plan 24 de la face supérieure 16 du substrat 10.

Les bâtonnets électroluminescents 8 de la source de lumière 3 présentent avantageusement la même forme. Ces bâtonnets sont chacun délimité par une face terminale 26 et par une paroi circonférentielle 28 qui s'étend le long de l'axe longitudinal. Lorsque les bâtonnets électroluminescents sont dopés et font l'objet d'une polarisation, la lumière résultante en sortie de la source de lumière 3 est émise principalement à partir de la paroi circonférentielle 28, étant entendu que l'on peut prévoir que des rayons lumineux sortent également, au moins en petite quantité, à partir de la face terminale 26. Il en résulte que chaque bâtonnet agit comme une unique diode électroluminescente et que la densité des bâtonnets électroluminescents 8 améliore la luminance de la source de lumière 3.

La paroi circonférentielle 28 d'un bâtonnet 8, correspondant à la coquille de nitrure de gallium, est recouverte par une couche d'oxyde conducteur transparent (TCO) 29 qui forme l'anode de chaque bâtonnet complémentaire à la cathode formée par le substrat.

Cette paroi circonférentielle 28 s'étend le long de l'axe longitudinal 22 depuis le substrat 10 jusqu'à la face terminale 26, la distance de la face terminale 26 à la face supérieure 16 du substrat, depuis laquelle prennent naissance les bâtonnets électroluminescents 8, définissant la hauteur de chaque bâtonnet. A titre d'exemple, on peut prévoir que la hauteur d'un bâtonnet électroluminescent 8 est comprise entre 1 et 10 micromètres, tandis que l'on peut prévoir que la plus grande dimension transversale de la face terminale, perpendiculairement à l'axe longitudinal 22 du bâtonnet électroluminescent concerné, soit inférieure à 2 micromètres. On peut également prévoir de définir la surface d'un bâtonnet, dans un plan de coupe perpendiculaire à cet axe longitudinal 22, dans une plage de valeurs déterminées, et notamment entre 1,96 et 4 micromètres carré.

Ces dimensions, données à titre d'exemple non limitatif, permettent de démarquer une source de lumière comprenant des bâtonnets électroluminescents d'une source de lumière à diodes électroluminescentes planes. Toutefois, comme détaillé dans ce qui suit, un deuxième mode de réalisation de l'invention prévoit l'utilisation de sources de lumière à diodes électroluminescentes.

On pourra également prévoir d'autres dimensionnements particuliers de la source de lumière selon l'invention, et notamment une dimension de la surface éclairante par exemple d'au plus 8 mm². La densité des bâtonnets et la superficie de la surface éclairante peuvent notamment être calculées pour que la luminance obtenue par la pluralité de bâtonnets électroluminescents soit par exemple d'au moins 60 Cd/mm². Cependant, il peut s'agir en variante de toute dimension et surface éclairante adaptées, y compris une surface éclairante par exemple supérieure à 8mm². La dimension optimale de la surface éclairante de la source dépendra de la focale de la lentille, de sa surface frontale et de la fonction visée.

On comprend que, lors de la formation des bâtonnets 8, la hauteur peut être modifiée d'une source de lumière à l'autre, de manière à accroître la luminance de la source de lumière lorsque la hauteur est augmentée. La hauteur des bâtonnets peut également être modifiée au sein d'une unique source de lumière 3, de sorte qu'un groupe de bâtonnets peut avoir une hauteur différente d'un autre groupe de bâtonnets d'une autre source de lumière 3.

La forme des bâtonnets électroluminescents 8 peut également varier d'une source de lumière 3 à une autre, notamment sur la section des bâtonnets et sur la forme de la face terminale 26. Il a été illustré, sur la figure 2, des bâtonnets électroluminescents présentant une forme générale cylindrique, et notamment de section polygonale, ici plus particulièrement hexagonale. On comprend qu'il importe que la lumière puisse être émise à travers la paroi circonférentielle, que celle-ci présente une forme polygonale ou circulaire par exemple.

Par ailleurs, la face terminale 26 peut présenter une forme sensiblement plane et perpendiculaire à la paroi circonférentielle, de sorte qu'elle s'étend sensiblement parallèlement à la face supérieure 16 du substrat 10, tel que cela est illustré sur la figure 2, ou bien elle peut présenter une forme bombée ou en pointe en son centre, de manière à multiplier les directions d'émission de la lumière sortant de cette face terminale, tel que cela est illustré sur la figure 3.

Sur la figure 2, les bâtonnets électroluminescents 8 sont agencés en matrice à deux dimensions. Cet agencement pourrait être tel que les bâtonnets électroluminescents soient agencés en quinconce. L'invention couvre d'autres répartitions des bâtonnets, avec notamment des densités de bâtonnets qui peuvent être variables d'une source de lumière à l'autre, et qui peuvent être variables selon différentes zones d'une même source de lumière 3. On a représenté sur la figure 2 la distance de séparation d1 de deux bâtonnets électroluminescents immédiatement adjacents dans une première direction transversale et la distance de séparation d2 de deux bâtonnets électroluminescents immédiatement adjacents dans une deuxième direction transversale.

Les distances de séparation d1 et d2 sont mesurées entre deux axes longitudinaux 20 de bâtonnets électroluminescents adjacents. Le nombre de bâtonnets électroluminescents 8 s'étendant en saillie du substrat 10 peut varier d'un dispositif à un autre, notamment pour augmenter la densité lumineuse de la source de lumière, mais on convient que l'une ou l'autre des distances de séparation dl, d2 doit être au minimum égale à 10 micromètres, afin que la lumière émise par la paroi circonférentielle 28 de chaque bâtonnet électroluminescent 8 puisse sortir de la matrice de bâtonnets.

La source de lumière électroluminescente 3 peut comprendre en outre, tel qu'illustré sur la figure 3, une couche 30 d'un matériau polymère dans laquelle des bâtonnets électroluminescents 8 sont au moins partiellement noyés. La couche 30 peut ainsi s'étendre sur toute l'étendue du substrat ou seulement autour d'un groupe déterminé de bâtonnets électroluminescents 8. Le matériau polymère, qui peut notamment être à base de silicone, permet de protéger les bâtonnets électroluminescents 8 sans gêner la diffusion des rayons lumineux. En outre, il est possible d'intégrer dans cette couche 30 de matériau polymère des moyens de conversion de longueur d'onde, et par exemple des luminophores, aptes à absorber au moins une partie des rayons émis par l'un des bâtonnets et à convertir au moins une partie de ladite lumière d'excitation absorbée en une lumière d'émission ayant une longueur d'onde différente de celle de la lumière d'excitation.

Les sources de lumière électroluminescentes 3 peuvent comporter en outre un revêtement 32 de matériau réfléchissant la lumière qui est disposé entre les bâtonnets électroluminescents 8 pour dévier les rayons, initialement orientés vers le substrat, vers la face terminale 26 des bâtonnets électroluminescents 8. En d'autres termes, la face supérieure 16 du substrat 10 peut comporter un moyen réfléchissant qui renvoie les rayons lumineux, initialement orientés vers la face supérieure 16, vers la face de sortie de la source de lumière 3. On récupère ainsi des rayons qui autrement seraient perdus. Ce revêtement 32 est disposé entre les bâtonnets électroluminescents 8 sur la couche d'oxyde conducteur transparent 29.

Ce premier mode de réalisation est particulièrement avantageux en ce que les deuxièmes et troisièmes branches illustrées sur la figure 1 peuvent être reliées sur le substrat directement. En outre, un même substrat peut être utilisé pour au moins deux sources de lumière électroluminescentes 3.

Selon un deuxième mode de réalisation, les sources de lumière 3 peuvent être des diodes électroluminescentes comprenant chacune un circuit imprimé miniaturisé (PCB) dans lequel sont intégrées les deuxième et troisième branches illustrées sur la figure 1. Les première et deuxième branches peuvent également être comprises dans un circuit intégré soudé sous le substrat silicium.

La figure 4 illustre un mode de réalisation détaillé de la deuxième branche d'un module électroluminescent selon un mode de réalisation de l'invention.

La première branche comprenant la source de lumière 3 et la troisième branche comprenant le module de temporisation 6 sont également illustrées sur la figure 4.

La deuxième branche comprend un transistor NPN 403, un transistor à effet de champ de type MOSFET 405 et quatre impédances 401.1 à 401.4, pouvant être des résistances par exemple.

Une première impédance 401.1 est placée entre l'entrée du module de lumière électroluminescente et le collecteur 406 du transistor NPN 403. Une deuxième impédance 401.2 est placée entre la sortie du module électroluminescent et l'émetteur 407 du transistor NPN 403. Une troisième impédance 401.3 est placée entre l'entrée du module électroluminescent et la base 408 du transistor NPN 403. Une quatrième impédance 401.4 est placée entre la sortie du module électroluminescent et la grille 410 du MOSFET 405.

La source 411 du MOSFET 405 est reliée à la sortie du module électroluminescent et le drain 409 du MOSFET 405 est relié à la grille 408 du transistor NPN 403.

La sortie du module de temporisation 6 est reliée à la grille du MOSFET 405. Le module de temporisation 6 est configuré pour ne transmettre aucun signal durant une durée prédéterminée après le début d'une période d'alimentation du driver 1 illustré sur la figure 1, et pour transmettre un signal à l'issue de la durée prédéterminée et ce au moins jusqu'à la fin de la période d'alimentation du driver 1.

Par défaut, lorsque la grille 410 du MOSFET 405 n'est pas alimentée par le module de temporisation 6, le courant ne circule pas entre le drain 409 et la source 405 et le courant en sortie de la troisième impédance 401.3 va donc dans la base 408 du transistor NPN. De ce fait, le courant circule entre le collecteur 406 et l'émetteur 407 et l'impédance (l'élément ou source de tension 5 illustré sur la figure 1) de la deuxième branche dépend donc uniquement des trois impédances 401.1, 401.2 et 401.3, qui peuvent être des résistances formant une source de tension. Les trois impédances 401.1, 401.2 et 401.3 sont choisies de manière à ce que la tension dans la deuxième branche, et donc dans la première branche comprenant la source de lumière 3, soit inférieure à la première tension directe seuil de la source de lumière 3. Par exemple, si la tension de seuil est de 3,5 V, les trois impédances 401.1, 401.2 et 401.3 peuvent être choisies de manière à ce que la tension aux bornes de la deuxième branche soit de 2V, durant la période prédéterminée, lorsque le module électroluminescent est alimenté par le driver 1 (période d'alimentation).

A l'issue de la période prédéterminée, le module de temporisation délivre un signal à la grille 410 du MOSFET 405 ce qui fait passer le courant entre le drain 409 et la source 411. Moins de courant étant reçu à la base 408, l'impédance du transistor NPN 403 augmente, augmentant ainsi l'impédance globale dans la deuxième branche, le transistor NPN 403 agissant alors comme un interrupteur ouvert.

La tension aux bornes de la deuxième branche dépasse alors la première tension directe seuil de la source de lumière électroluminescente 3 qui devient donc passante, et qui reste passante jusqu'à la fin de la période d'alimentation du driver 1.

Ainsi, en appliquant des durées prédéterminées croissantes dans les différents modules de temporisation 6 des modules électroluminescents 2.1 à 2.n, un effet de défilement lumineux peut être créé en employant un unique fil d'alimentation.

Il est à noter que la réalisation de la deuxième branche illustrée sur la figure 4 est donnée à titre illustratif uniquement, et l'invention ne saurait se limiter à une telle réalisation. En effet, l'invention couvre toute branche comprenant une impédance et un moyen contrôlable de modifier l'impédance globale dans la deuxième branche, le moyen contrôlable étant contrôlé par une sortie de l'unité de temporisation 6.

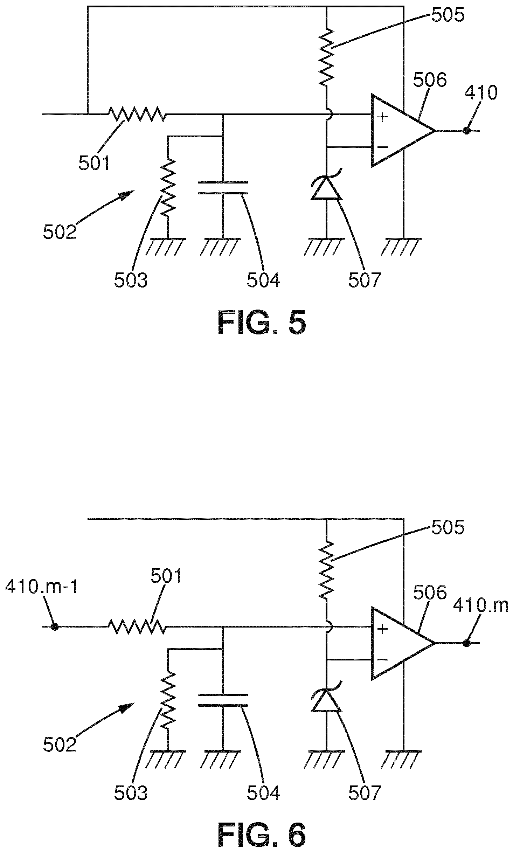

La figure 5 présente un schéma détaillé d'une unité de temporisation 6 selon un mode de réalisation de l'invention.

Le module de temporisation 6 comprend une première impédance 501 (de type résistance par exemple) reliée à l'entrée du module électroluminescent d'une part et à une entrée d'un circuit RC 502 d'autre part, le circuit RC comprenant une capacité 504 et une deuxième impédance 503 (de type résistance par exemple) en parallèle.

L'entrée du circuit RC est en outre reliée à une entrée positive d'un comparateur 506 alimenté directement par le driver 1.

Une troisième impédance 505 est placée entre l'entrée du module de lumière électroluminescent d'une part et l'entrée négative du comparateur 506 d'autre part. L'entrée négative du comparateur 506 est en outre reliée à une diode Zener 507 permettant de fixer la tension à l'entrée négative du comparateur 506.

La sortie du comparateur 506 est reliée à la grille 410 du MOSFET 405 de la figure 4 (ou plus généralement contrôle l'interrupteur 4 de la figure 1).

Lorsque le module électroluminescent est alimenté, le condensateur 504 se charge jusqu'à ce que la tension aux bornes du condensateur 504 atteigne la tension imposée par la diode Zener 507 à l'issue de la durée prédéterminée. A l'issue de la durée prédéterminée, un signal est donc émis du comparateur, modifiant la valeur de l'impédance globale dans la deuxième branche de manière à rendre la source de lumière électroluminescente 3 passante.

Cette durée prédéterminée dépend notamment de la première impédance 501.

Ainsi, en équipant chacun des modules électroluminescents de premières impédances 501 de valeurs différentes, on obtient des durées prédéterminées différentes, ce qui permet la réalisation de l'effet de défilement visé.

A noter qu'à l'expiration de la période d'alimentation, la capacité 504 se décharge dans la branche de la deuxième impédance 503, et le même effet de défilement peut être recréé lorsque débute une nouvelle période d'alimentation, permettant ainsi un effet de clignotement supplémentaire.

La figure 6 présente un schéma détaillé d'une unité de temporisation 6 d'un module de lumière électroluminescent d'indice m selon une variante de l'invention.

L'unité de temporisation 6 comprend les mêmes composants, référencés de la même manière que sur la figure 5.

La différence avec le mode de réalisation de la figure 5 réside dans le fait que le circuit RC 502 est alimenté par la sortie 410.n-1 du comparateur 506 du module électroluminescent précédent, d'indice m-1.

Ainsi, la capacité 504 du module électroluminescent 2.m commence à se charger lorsque le comparateur 506 du module de lumière électroluminescent 2.m-1 émet un signal en sortie. Il est ainsi possible d'avoir des premières impédances 501 qui soient identiques dans tous les modules électroluminescents, ce qui facilite la production de tels modules et ce qui par conséquent réduit leur coût, comparativement à la solution de la figure 5. Ainsi, chaque unité de temporisation 6 applique une même durée de temporisation (correspondant au temps nécessaire à la capacité 504 pour que la tension à ses bornes atteigne le niveau imposé par la diode Zener 507). La durée prédéterminée du module de lumière électroluminescent 2.m est ainsi égale à la somme de la durée de temporisation et de la durée prédéterminée du module de lumière électroluminescent 2.m-1.

En variante, les modules électroluminescents ont des impédances 501 respectives de valeurs différentes. Chaque unité de temporisation 6 applique ainsi une durée de temporisation qui lui est propre. La durée prédéterminée du module de lumière électroluminescent 2.m est ainsi égale à la somme de la durée de temporisation de son module de temporisation et de la durée prédéterminée du module de lumière électroluminescent 2.m-1.

Dans l'exemple ci-dessus, m varie entre 2 et n. Bien entendu, pour le module électroluminescent 2.1, le circuit RC est directement alimenté par le driver 1, puisqu'il s'agit du premier module.

De manière avantageuse, que ce soit pour le mode de réalisation de la figure 5 ou pour la variante de la figure 6, on peut prévoir que toutes les durées prédéterminées soient plus courtes (et de préférence trois fois plus courtes) que la période d'alimentation. Par exemple, la durée prédéterminée la plus longue (celle du module électroluminescent 2.n) est égale à 100 ms, la durée d'alimentation est égale à 500 ms et la durée de coupure est égale à 500 ms.

Bien entendu, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention.

## Revendications

1. Dispositif d'émission lumineuse, notamment d'éclairage et/ou de signalisation, notamment pour véhicule automobile, comprenant :
au moins un premier module électroluminescent (2.1) et un deuxième module électroluminescent (2.2) alimentés en série ; **caractérisé en ce que**
chaque module électroluminescent comprend, en parallèle :
• une première branche comprenant une source de lumière (3) ayant une première tension directe seuil au-delà de laquelle la source de lumière est passante ;
• une deuxième branche comprenant un élément (5) tel que la tension aux bornes dudit élément est inférieure à la première tension directe seuil de la source de lumière ;
• une troisième branche comprenant un module de temporisation (6) apte à temporiser une durée prédéterminée et à modifier, à l'issue de ladite durée prédéterminée, une impédance globale de la deuxième branche de manière à ce qu'une tension dans la deuxième branche soit supérieure ou égale à ladite première tension directe seuil de la source de lumière;
dans lequel la durée prédéterminée dans le premier module électroluminescent est inférieure à la durée prédéterminée dans le deuxième module électroluminescent.

2. Dispositif selon la revendication 1, dans lequel chaque source de lumière comprend au moins un élément émissif à semi-conducteur.

3. Dispositif selon la revendication 2, dans lequel chacune des sources de lumière (3) comprend une pluralité d'unités électroluminescentes (8) de dimensions submillimétriques formées sur un substrat (10).

4. Dispositif selon la revendication 3, dans lequel les deuxième et troisième branches sont reliées audit substrat.

5. Dispositif selon la revendication 3 ou 4, dans lequel les sources de lumière (3) sont formées sur un même substrat (10).

6. Dispositif selon la revendication 2, dans lequel chacune des sources de lumière (3) comprend une diode électroluminescente reliée à un circuit intégré dédié, dans lequel les deuxième et troisième branches d'un module électroluminescent sont comprises dans le circuit intégré ou dans un circuit intégré soudé sous un substrat de la diode électroluminescente.

7. Dispositif selon l'une des revendications précédentes, dans lequel les premiers et deuxièmes modules électroluminescents (2.1 ; 2.2) sont alimentés cycliquement durant des périodes d'alimentation espacées par des périodes de coupure,
et dans lequel les durées prédéterminées des modules de lumière sont toutes inférieures à une période d'alimentation.

8. Dispositif selon la revendication 7, dans lequel les durées prédéterminées des modules électroluminescents sont toutes au moins trois fois inférieures à la période d'alimentation.

9. Dispositif selon l'une des revendications précédentes, dans lequel la deuxième branche comprend en outre un interrupteur (4) fermé par défaut, et dans lequel le module de temporisation modifie l'impédance globale de la deuxième branche en ouvrant ledit interrupteur.

10. Dispositif selon l'une des revendications précédentes, dans lequel une sortie du module de temporisation (6) du premier module électroluminescent (2.1) est reliée à une entrée du module de temporisation du deuxième module électroluminescent (2.2), dans lequel les modules de temporisation sont aptes à appliquer des durées de temporisation respectives, dans lequel la durée prédéterminée du premier module électroluminescent est égale à la durée de temporisation du module de temporisation du premier module électroluminescent, et dans lequel la durée prédéterminée du deuxième module électroluminescent est égale à la durée prédéterminée du premier module électroluminescent plus la durée de temporisation du module de temporisation du deuxième module électroluminescent.

11. Dispositif selon l'une des revendications 1 à 9, dans lequel une sortie du module de temporisation (6) du premier module électroluminescent (2.1) est reliée à une entrée du module de temporisation du deuxième module électroluminescent (2.2), dans lequel les modules de temporisation sont aptes à appliquer une même durée de temporisation donnée, dans lequel la durée prédéterminée du premier module électroluminescent est égale à la durée de temporisation donnée et dans lequel la durée prédéterminée du deuxième module électroluminescent est égale à deux fois la durée de temporisation donnée.

12. Dispositif selon l'une des revendications précédentes, dans lequel chaque module de temporisation (6) comprend au moins une capacité (504), une première résistance (501) et un comparateur (506) agencés de manière à ce que, lorsque les modules électroluminescents sont alimentés, une tension aux bornes de la capacité devienne supérieure à une tension seuil du comparateur à l'issue de la durée prédéterminée, et dans lequel le comparateur est configuré pour modifier la tension dans la deuxième branche lorsque la tension aux bornes de la capacité est supérieure à la tension seuil du comparateur.

13. Dispositif selon les revendications 7 et 12, dans lequel chaque module de temporisation comprend en outre une deuxième résistance (503) en parallèle avec la capacité (504) de manière à décharger la capacité lors de chaque période de coupure.

14. Dispositif selon l'une des revendications précédentes, dans lequel, pour chaque module électroluminescent, la deuxième branche comprend :
- un transistor à effet de champ (405) ;
- un transistor NPN (403) ;
- une première impédance (401.1) placée entre une entrée du module électroluminescent et un collecteur (406) du transistor NPN ;
- une deuxième impédance (401.2) placée entre une sortie du module életroluminescent et un émetteur (407) du transistor NPN ;
- une troisième impédance (401.3) placée entre l'entrée du module électroluminescent et une base (408) du transistor NPN ;
- une quatrième impédance (401.4) placée entre la sortie du module électroluminescent et une grille (410) du transistor à effet de champ ;
dans lequel une source (411) du transistor à effet de champ est reliée à la sortie du module électroluminescent, dans lequel un drain (409) du transistor à effet de champ est relié à la grille du transistor NPN, dans lequel la sortie du module de temporisation est reliée à la grille du transistor à effet de champ, de manière à ce que :
- durant la période prédéterminée, le transistor NPN soit apte à faire circuler un courant entre le collecteur et l'émetteur, de manière à ce qu'une impédance totale de la deuxième dépendent des première, deuxième et troisième impédances uniquement, les première, deuxième et troisième impédances étant telles que la tension dans la deuxième branche est inférieure à la tension directe seuil de la source de lumière ;
à l'issue de la période prédéterminée, le module de temporisation soit apte à délivrer un courant à la grille du transistor à effet de champ, provoquant le passage du courant entre le drain et la source du transistor à effet de champ et augmentant ainsi une impédance du transistor NPN et l'impédance globale dans la deuxième branche, au-delà de la tension directe seuil de la source de lumière.

15. Dispositif selon l'une des revendications précédentes, comprenant en outre un pilote (1) apte à alimenter en série les modules électroluminescents.

## Patentansprüche

1. Vorrichtung zur Lichtabgabe, insbesondere zur Beleuchtung und/oder Signalisierung, insbesondere für ein Kraftfahrzeug, umfassend:
mindestens ein elektrolumineszentes Modul (2.1) und ein zweites elektrolumineszentes Modul (2.2), die in Reihe versorgt werden;
**dadurch gekennzeichnet, dass**
jedes elektrolumineszente Modul Folgendes parallel umfasst:
• einen ersten Zweig, umfassend eine Lichtquelle (3) mit einer direkten Schwellenspannung, über welcher die Lichtquelle stromführend ist;
• einen zweiten Zweig, umfassend ein Element (5), so dass die Spannung an den Anschlüssen des Elements geringer als die erste direkte Schwellenspannung der Lichtquelle ist;
• einen dritten Zweig, umfassend ein Verzögerungsmodul (6), das geeignet ist, einen vorbestimmten Zeitraum zu verzögern und bei Ablauf des vorbestimmten Zeitraums eine Gesamtimpedanz des zweiten Zweigs zu ändern, so dass eine Spannung in dem zweiten Zweig größer oder gleich der ersten direkten Schwellenspannung der Lichtquelle ist;
wobei der vorbestimmte Zeitraum im ersten elektrolumineszenten Modul geringer als der vorbestimmte Zeitraum im zweiten elektrolumineszenten Modul ist.

2. Vorrichtung nach Anspruch 1, wobei jede Lichtquelle mindestens ein emittierendes Halbleiterelement umfasst.

3. Vorrichtung nach Anspruch 2, wobei jede der Lichtquellen (3) eine Mehrzahl von elektrolumineszenten Einheiten (8) mit Sub-Millimeter-Abmessungen umfasst, die auf einem Substrat (10) ausgebildet sind.

4. Vorrichtung nach Anspruch 3, wobei der zweite und der dritte Zweig mit dem Substrat verbunden sind.

5. Vorrichtung nach Anspruch 3 oder 4, wobei die Lichtquellen (3) auf einem selben Substrat (10) ausgebildet sind.

6. Vorrichtung nach Anspruch 2, wobei jede der Lichtquellen (3) eine elektrolumineszente Diode umfasst, die mit einer dedizierten integrierten Schaltung verbunden ist, wobei der zweite und der dritte Zweig eines elektrolumineszenten Moduls in der integrierten Schaltung oder in einer integrierten Schaltung, die unter ein Substrat der elektrolumineszenten Diode gelötet ist, enthalten sind.

7. Vorrichtung nach einem der vorhergehenden Ansprüche, wobei das erste und das zweite elektrolumineszente Modul (2.1; 2.2) während Versorgungsperioden, die durch Trennungsperioden beabstandet sind, zyklisch versorgt werden,
und wobei die vorbestimmten Zeiträume der Lichtmodule alle kleiner als eine Versorgungsperiode sind.

8. Vorrichtung nach Anspruch 7, wobei die vorbestimmten Zeiträume der elektrolumineszenten Module alle mindestens dreimal kleiner als die Versorgungsperiode sind.

9. Vorrichtung nach einem der vorhergehenden Ansprüche, wobei der zweite Zweig ferner einen Schalter (4) umfasst, der standardmäßig geschlossen ist, und wobei das Verzögerungsmodul die Gesamtimpedanz des zweiten Zweigs durch Öffnen des Schalters ändert.

10. Vorrichtung nach einem der vorhergehenden Ansprüche, wobei ein Ausgang des Verzögerungsmoduls (6) des ersten elektrolumineszenten Moduls (2.1) mit einem Eingang des Verzögerungsmoduls des zweiten elektrolumineszenten Moduls (2.2) verbunden ist, wobei die Verzögerungsmodule geeignet sind, jeweilige Verzögerungszeiträume anzuwenden, wobei der vorbestimmte Zeitraum des ersten elektrolumineszenten Moduls gleich dem Verzögerungszeitraum des Verzögerungsmoduls des ersten elektrolumineszenten Moduls ist, und wobei der vorbestimmte Zeitraum des zweiten elektrolumineszenten Moduls gleich dem vorbestimmten Zeitraum plus den Verzögerungszeitraum des Verzögerungsmoduls des zweiten elektrolumineszenten Moduls ist.

11. Vorrichtung nach einem der Ansprüche 1 bis 9, wobei ein Ausgang des Verzögerungsmoduls (6) des ersten elektrolumineszenten Moduls (2.1) mit einem Eingang des Verzögerungsmoduls des zweiten elektrolumineszenten Moduls (2.2) verbunden ist, wobei die Verzögerungsmodule geeignet sind, einen selben bestimmten Verzögerungszeitraum anzuwenden, wobei der vorbestimmte Zeitraum des ersten elektrolumineszenten Moduls gleich dem bestimmten Verzögerungszeitraum ist und wobei der vorbestimmte Zeitraum des zweiten elektrolumineszenten Moduls gleich dem Doppelten des bestimmten Verzögerungszeitraums ist.

12. Vorrichtung nach einem der vorhergehenden Ansprüche, wobei jedes Verzögerungsmodul (6) mindestens eine Kapazität (504), einen ersten Widerstand (501) und einen Komparator (506) umfasst, die derart angeordnet sind, dass, wenn die elektrolumineszenten Module versorgt werden, eine Spannung an den Anschlüssen der Kapazität bei Ablauf des vorbestimmten Zeitraums höher als eine Schwellenspannung des Komparators wird, und wobei der Komparator dazu ausgebildet ist, die Spannung in dem zweiten Zweig zu ändern, wenn die Spannung an den Anschlüssen der Kapazität höher als die Schwellenspannung des Komparators ist.

13. Vorrichtung nach Anspruch 7 und 12, wobei jedes Verzögerungsmodul ferner einen zweiten Widerstand (503) parallel zur Kapazität (504) umfasst, um die Kapazität bei jeder Trennungsperiode zu entladen.

14. Vorrichtung nach einem der vorhergehenden Ansprüche, wobei für jedes elektrolumineszente Modul der zweite Zweig Folgendes umfasst:
- einen Feldeffekttransistor (405);
- einen NPN-Transistor (403);
- eine erste Impedanz (401.1), die zwischen einem Eingang des elektrolumineszenten Moduls und einem Kollektor (406) des NPN-Transistors angeordnet ist;
- eine zweite Impedanz (401.2), die zwischen einem Ausgang des elektrolumineszenten Moduls und einem Emitter (407) des NPN-Transistors angeordnet ist;
- eine dritte Impedanz (401.3), die zwischen dem Eingang des elektrolumineszenten Moduls und einer Basis (408) des NPN-Transistors angeordnet ist;
- eine vierte Impedanz (401.4), die zwischen dem Ausgang des elektrolumineszenten Moduls und einem Gate (410) des Feldeffekttransistors angeordnet ist;
wobei eine Source (411) des Feldeffekttransistors mit dem Ausgang des elektrolumineszenten Moduls verbunden ist, wobei ein Drain (409) des Feldeffekttransistors mit dem Gate des NPN-Transistors verbunden ist, wobei der Ausgang des Verzögerungsmoduls mit dem Gate des Feldeffekttransistors verbunden ist, so dass:
- während der vorbestimmten Periode der NPN-Transistor imstande ist, einen Strom zwischen dem Kollektor und dem Emitter zirkulieren zu lassen, so dass eine Gesamtimpedanz der zweiten einzig von der ersten, zweiten und dritten Impedanz abhängt, wobei die erste, zweite und dritte Impedanz derart beschaffen sind, dass die Spannung im zweiten Zweig geringer als die direkte Schwellenspannung der Lichtquelle ist;
bei Ablauf der vorbestimmten Periode das Verzögerungsmodul imstande ist, dem Gate des Feldeffekttransistors einen Strom zuzuführen, wodurch der Fluss des Stroms zwischen dem Drain und der Source des Feldeffekttransistors bewirkt und somit eine Impedanz des NPN-Transistors und die Gesamtimpedanz in dem zweiten Zweig über die direkte Schwellenspannung der Lichtquelle hinaus erhöht wird.

15. Vorrichtung nach einem der vorhergehenden Ansprüche, ferner umfassend einen Treiber (1), der geeignet ist, die elektrolumineszenten Module in Reihe zu versorgen.

## Claims

1. Light-emitting device, especially for lighting and/or signaling, especially for a motor vehicle, comprising:
at least a first electroluminescent module (2.1) and a second electroluminescent module (2.2) energized in series;
**characterized in that** each electroluminescent module comprises, in parallel:
• a first branch comprising a light source (3) having a first direct threshold voltage beyond which the light source is gated on;
• a second branch comprising an element (5) such that the voltage on the terminals of said element is less than the first direct threshold voltage of the light source;
• a third branch comprising a timing module (6) able to time a predetermined period and modify, at the end of said predetermined period, an overall impedance of the second branch so that a voltage in the second branch is greater than or equal to said first direct threshold voltage of the light source;
wherein the predetermined period in the first electroluminescent module is less than the predetermined period in the second electroluminescent module.

2. Device according to Claim 1, wherein each light source comprises at least one semiconductor emitting element.

3. Device according to Claim 2, wherein each of the light sources (3) comprises a plurality of electroluminescent units (8) of submillimeter dimensions formed on a substrate (10).

4. Device according to Claim 3, wherein the second and third branches are connected to said substrate.

5. Device according to Claim 3 or 4, wherein the light sources (3) are formed on the same substrate (10).

6. Device according to Claim 2, wherein each of the light sources (3) comprises a light-emitting diode connected to a dedicated integrated circuit, wherein the second and third branches of an electroluminescent module are comprised in the integrated circuit or in an integrated circuit soldered beneath a substrate of the light-emitting diode.

7. Device according to one of the preceding claims, wherein the first and second electroluminescent modules (2.1; 2.2) are energized in cycles during power supply periods spaced apart by cut-out periods,
and wherein the predetermined periods of the light modules are all less than one power supply period.

8. Device according to Claim 7, wherein the predetermined periods of the electroluminescent modules are all at least three times less than the power supply period.

9. Device according to one of the preceding claims, wherein the second branch furthermore comprises a switch (4) closed by default, and the timing module can modify the overall impedance of the second branch by opening said switch.

10. Device according to one of the preceding claims, wherein an output of the timing module (6) of the first electroluminescent module (2.1) is connected to an input of the timing module of the second electroluminescent module (2.2), wherein the timing modules are able to apply respective timing periods, wherein the predetermined period of the first electroluminescent module is equal to the timing period of the timing module of the first electroluminescent module, and wherein the predetermined period of the second electroluminescent module is equal to the predetermined period of the first electroluminescent module plus the timing period of the timing module of the second electroluminescent module.

11. Device according to one of Claims 1 to 9, wherein an output of the timing module (6) of the first electroluminescent module (2.1) is connected to an input of the timing module of the second electroluminescent module (2.2), wherein the timing modules are able to apply the same given timing period, wherein the predetermined period of the first electroluminescent module is equal to the given timing period, and wherein the predetermined period of the second electroluminescent module is equal to twice the given timing period.

12. Device according to one of the preceding claims, wherein each timing module (6) comprises at least one capacitance (504), a first resistance (501) and a comparator (506) arranged such that when the electroluminescent modules are energized, a voltage on the terminals of the capacitance becomes larger than a threshold voltage of the comparator at the end of the predetermined period, and wherein the comparator is designed to modify the voltage in the second branch when the voltage on the terminals of the capacitance is greater than the threshold voltage of the comparator.

13. Device according to Claims 7 and 12, wherein each timing module further comprises a second resistance (503) in parallel with the capacitance (504) so as to discharge the capacitance during each cut-out period.

14. Device according to one of the preceding claims, wherein for each electroluminescent module the second branch comprises:
- a field effect transistor (405) ;
- a NPN transistor (403);
- a first impedance (401.1) placed between an input of the electroluminescent module and a collector (406) of the NPN transistor;
- a second impedance (401.2) placed between an output of the electroluminescent module and an emitter (407) of the NPN transistor;
- a third impedance (401.3) placed between the input of the electroluminescent module and a base (408) of the NPN transistor;
- a fourth impedance (401.4) placed between the output of the electroluminescent module and a gate (410) of the field effect transistor;
wherein a source (411) of the field effect transistor is connected to the output of the electroluminescent module, wherein a drain (409) of the field effect transistor is connected to the gate of the NPN transistor, wherein the output of the timing module is connected to the gate of the field effect transistor such that:
- during the predetermined period, the NPN transistor is able to let a current pass between the collector and the emitter, so that a total impedance of the second depends solely on the first, second and third impedances, the first, second and third impedances being such that the voltage in the second branch is less than the direct threshold voltage of the light source;
at the end of the predetermined period, the timing module is able to deliver a current to the gate of the field effect transistor, causing current to pass between the drain and the source of the field effect transistor and thus increasing an impedance of the NPN transistor and the overall impedance in the second branch, beyond the direct threshold voltage of the light source.

15. Device according to one of the preceding claims, furthermore comprising a pilot (1) able to energize the electroluminescent modules in series.
